# EUROPEAN PATENT APPLICATION

(11) **EP 2 801 517 A1**
(43) Date of publication of application: **12.11.2014**
(21) Application number: 13166645.5
(22) Date of filing: 06.05.2013
(51) Int. Cl.: B63B 27/30, B63B 27/36, B63C 11/52, B63G 8/00, B66C 13/02

(54) **Underwater module handling apparatus**

(71) Applicant: Siemens Aktiengesellschaft, 80333 München (DE)
(72) Inventor: Boe, Ove, 7549 Tanem (NO)

(57) **Abstract**

An underwater module handling apparatus is provided which comprises an installation tool (1) realised for connection to a module (2) to be installed at the underwater location; a suspension means (16) for suspending the installation tool (1) from a marine vessel (4); connecting means (13) for connecting the installation tool (1) to a number of anchors (14) arranged at the underwater location; and a number of actuators (10) for actuating the connecting means (13) to effect a horizontal displacement (H) of the installation tool (1). The invention further describes a method of handling a module (2) in an underwater location.

## Description

### Field of the invention

The invention describes an underwater module handling apparatus and a method of handling a module in an underwater location.

### Background

At an offshore wind park, components of a subsea power grid must be installed on the seabed. Such components might include transformers, switchgear modules, variable speed drive (VSD) modules, etc. Any of these can have a weight in the order of 100 tonnes. The modules must be guided into place on an installation template, and a module may be realised to fit onto a guidepost of the template.

A vessel such as an intervention vessel may be used to bring a heavy module into place. This can be done by manoeuvring the vessel into place over the template, and using a crane to lower the heavy module onto the template. The crane may be moved in one or more directions to correct the position of the module relative to the guidepost. One or more remotely operated underwater vehicles (ROVs) may be used to observe the progress of the mounting procedure, and maybe also to perform corrections by pushing against the module. An ROV can be controlled from a vessel at sea-level, and is generally equipped with cameras so that its progress can be observed. However, it is generally difficult to make the necessary corrections to the position of such a heavy module suspended from a crane. Furthermore, weather conditions and underwater currents can further impede the installation process. Therefore, bringing such heavy components into place can be time-consuming and very expensive. After placing each module onto the template guideposts, the various components of the subsea installation must then be interconnected using suitable cables, jumpers, etc. An ROV may be used for such a step, since an ROV also generally has various gripping tools that can be controlled using remote control commands.

The more agile ROVs cannot be used for the mounting procedure, since the weight of an object that can be safely held and manipulated by an ROV is limited to a few hundred kilograms. The installation process is therefore generally time-consuming and expensive, largely because of the difficulties associated with bringing the heavy modules into place.

### Summary

It is therefore an object of the invention to provide an improved way of manipulating heavy equipment under water.

This object is achieved by the features of the independent claims.

According to an embodiment of the invention, an underwater module handling apparatus is provided which comprises an installation tool realised for connection to a module to be installed in an underwater location; a suspension means for suspending the installation tool from a marine vessel; a connecting means for connecting the installation tool to a number of anchors arranged at the underwater location; and a number of actuators for actuating the connecting means to effect a horizontal displacement of the installation tool.

An advantage of the underwater module handling apparatus according to the embodiment is that it allows a precise alignment of the module over its final destination, for example its destination over a guidepost of a template for a subsea power grid installation. Also, the connecting means that connect the installation tool to the anchors can be actuated so that the installation tool is caused to move sideways. This allows a three-dimensional position control of the installation tool, so that a quick and simple positioning of the module is made possible. Much time and effort can be saved in this way, so that a more economical installation is possible.

According to a further embodiment of the invention, a method of handling a module in an underwater location is provided which comprises the steps of connecting a module to be installed at the underwater location to an installation tool; suspending the installation tool from a marine vessel over the underwater location; connecting the installation tool to a number of anchors arranged at the underwater location; and actuating the connecting means to effect a horizontal displacement of the installation tool.

The steps of the method according to the embodiment are based on an established procedure of installing a module at a subsea location, and are augmented by the use of the installation tool and the anchors. An advantage of the method according to the invention is that the manipulating procedure is straightforward and quick, since any "fine" adjustment of the position of the module over its final destination can be quickly and simply carried out by an appropriate control of one or more of the actuators.

Particularly advantageous embodiments and features of the invention are given by the dependent claims, as revealed in the following description. Features of different claim categories may be combined as appropriate to give further embodiments not described herein.

The underwater module handling apparatus according to the invention can be used for any marine location, whether lake or sea. In the following, without restricting the invention in any way, it may be assumed that the underwater location is a subsea location.

The installation tool can be realised as a type of platform or frame. Preferably, the installation tool is equipped with an actuator for actuating the suspension means to effect a vertical displacement of the installation tool relative to a vessel such as an intervention vessel. Preferably, the installation tool is realised for connection to an intervention vessel, so that the module to be installed can be mounted or connected to the installation tool at the level of the intervention vessel, and the installation tool can then be lowered from the intervention vessel. This has the advantage that any manipulation of the heavy module can be performed using cranes or other equipment already provided on the intervention vessel. The installation tool can be connected in any suitable way to the vessel so that it can be lowered into the water, for example using a cable to connect to a crane of the intervention vessel. The actuator for the suspension means preferably comprises a winch, which can be mounted on board the intervention vessel, or which can be mounted to the installation tool. A winch can be driven using any suitable means, for example an electric motor, a diesel motor, a hydraulic motor, etc.

Preferably, such a winch comprises a constant-pull winch, which delivers a constant pulling force over the entire cable or rope length, and allows the cable or rope to be fed out or pulled in at a constant speed. Since this winch serves to raise or lower the installation tool, it may be referred to as a "vertical position" winch in the following.

The module can then be lowered at a steady speed towards the installation site, for example a template for a subsea power grid. The intervention vessel can have been brought into place so that the module can be lowered fairly accurately over the installation site. Once the installation tool has been lowered into place, it can be connected to a number of anchors. To this end, the installation tool preferably comprises suitable connecting means, for example a suitably long length of cable that can hooked onto a waiting anchor. Preferably, the installation tool is realised for connection to at least three anchors that have been previously arranged on the seabed. For example, if the installation tool is a flat "platform" or open framework, it can be connected at each corner to one of the anchors. In the case of a rectangular installation tool, this can be connected to four anchors, one at each corner.

To adjust the horizontal position of the installation tool, the actuators of the connecting means can be controlled so that the lengths of the connecting means are adjusted. The installation tool will be "pulled" toward an anchor when the cable connecting that anchor to the installation tool is shortened; similarly the installation tool can move away from an anchor when the cable connecting that anchor to the installation tool is lengthened. Here also, a winch can be used as an actuator for such a connecting means or cable. The winches can be controlled in any one of several established methods, for example by using a control unit (at the level of the intervention vessel) to generate suitable commands or signals for each winch motor. When more than one winch is used, these can be controlled individually. However, in a preferred embodiment of the invention, the winches are preferably synchronously controlled such that a horizontal displacement of the installation tool is effected by a shortening of one or two connecting means and a lengthening of the other connecting means. Here also, the use of constant-pull winches can ensure that the horizontal displacement of the installation tool is carried out in a smooth and controlled manner. In the following, these winches may be referred to as "horizontal position" winches.

The vertical control of the suspension means and the horizontal control of the connecting means allows a precise placement of the module to be installed. Preferably, the module is suspended from the installation tool using an auxiliary tool such as another winch, for example a lifting winch, so that the module can then be lowered into place at its final destination, for example onto a guidepost of a template, without having to make any more vertical height adjustments to the suspension means of the lifting tool.

In a further preferred embodiment of the underwater module handling apparatus according to the invention, the installation tool also comprises a number of further auxiliary tools to carry out procedures on the modules before or after installation on the template. For example, the installation tool can comprise one or more hydraulic arms. A hydraulic arm can be equipped with a gripping tool or with another suitable type of tool, so that it can be controlled to perform a specific function such as manipulating or installing components, connectors, etc. For example, after mounting a transformer onto the template, a suitable tool can be remotely controlled to join a connector of the transformer to a connector on another component or on the template.

To control the actuators and any auxiliary tools, the underwater module handling apparatus according to the invention preferably also comprises a supply line for connecting an auxiliary tool and/or an actuator to a power supply and/or to a controller, such as a controller on board the intervention vessel. Control signals can be issued from a controller, for example to actuate one lateral motion winch to play out more cable, and to actuate another, opposite, lateral motion winch to retract some cable. In this way, a horizontal displacement of the installation tool can be achieved. Similarly, control signals can be issued to a lifting winch to raise or lower the installation tool, or to a module lifting winch to raise or lower the module being transported to the template.

Preferably, the method according to the invention comprises the step of "locking" the winches, specifically the horizontal and vertical position winches, in order to "fix" the position of the installation tool relative to the template. In this way, any work being done on a module, for example a connecting step being performed one the modules of the subsea installation by a hydraulic arm of the installation tool , can be carried out in a steady and safe manner, even if underwater currents are present.

In a preferred embodiment of the method according to the invention, a step of depositing an arrangement of anchors on the seabed near the installation site is preferably carried out prior to the module installation procedure. For example, when a template for a subsea power grid is being prepared, three or four anchors can be deposited at a suitable distance from the template, for example one anchor at each corner of a template. An anchor can comprise a concrete block, for example with a robust ring for connecting to the cable of a lateral motion winch for use in a later module installation procedure as described above. Alternatively or in addition, the template can comprise anchoring points at one or more corners, with connecting means such as a steel ring for later connection to a cable of a lateral motion winch. Such a realisation may be feasible if the template is relatively large.

Such a connecting step could be carried out using an auxiliary tool mounted on the installation tool. However, such a connection procedure would also require position control of the installation tool to be carried out by a crane of the intervention vessel, and this might be a slow and tedious procedure, as explained above, and may take too long to connect all the cables or connecting means of the installation tool to the anchors. Therefore, in a preferred embodiment of the invention, the method comprises a step of controlling a remotely operated vessel to connect the installation tool to the anchors. This can be carried out relatively quickly, so that the subsequent installation steps can be carried out sooner.

### Brief description of the drawings

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a stage in a prior art subsea module handling procedure;
Fig. 2 shows a first stage in a subsea module handling method according to an embodiment of the invention;
Fig. 3 shows a second stage in a subsea module handling method according to an embodiment of the invention;
Fig. 4 shows a third stage in a subsea module handling method according to an embodiment of the invention;
Fig. 5 shows a further stage in a subsea module handling method according to an embodiment of the invention.

In the diagrams, like numbers refer to like objects throughout. Objects in the diagrams are not necessarily drawn to scale.

### Detailed description

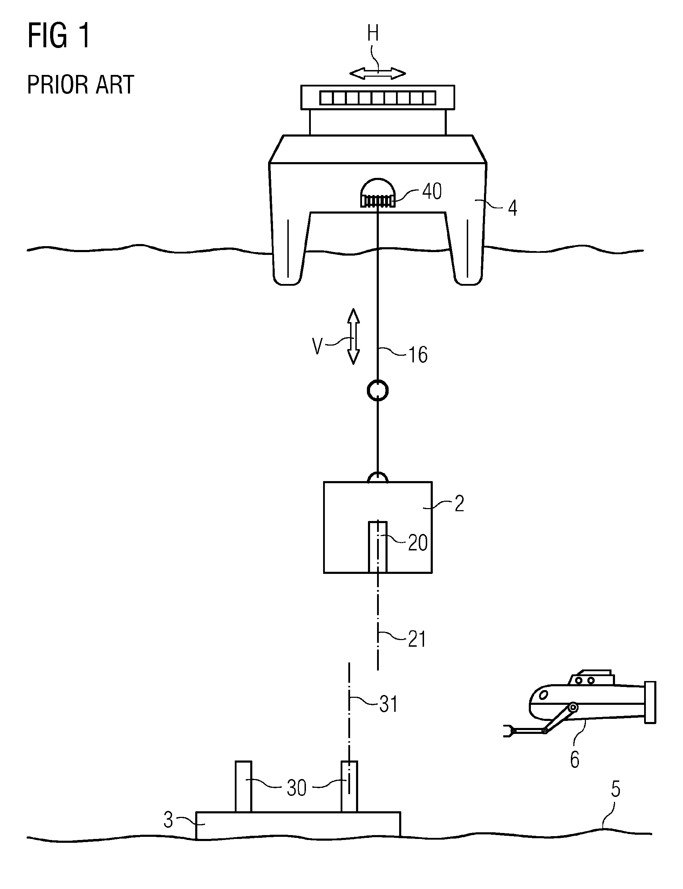

Fig. 1 is a simplified diagram showing a vessel 4 such as an intervention vessel 4 that has been positioned over a template 3 for a subsea installation, e.g. for a subsea power grid. In this prior art method, the intervention vessel is lowering a module 2 towards the template 3 by means of a suspension cable 16. The purpose of the exercise is to install the module 2 on a specific predefined part of the template 3. In this simplified diagram, a correct placement is defined by a guidepost 30 on the template 3, and a corresponding guide sleeve 20 on the module 2. Ideally, the intervention vessel 4 is placed so that a vertical axis 21 of the guide sleeve 20 and a vertical axis 31 of the guide post 30 align, so that the module 2 need only be lowered into place, for example using a winch and cable. Height adjustments can be made by retracting or paying out more cable, as indicated by the vertical arrow V. However, underwater currents acting on the module 2 or strong winds at sea level acting on the intervention vessel can make the alignment process exceedingly difficult and very time-consuming. The module 2 may be suspended from a crane on board the intervention vessel 4, allowing some lateral position corrections to be made, as indicated by the horizontal arrow H. Additionally, an ROV 6 may be employed to observe the alignment process and to relay its observations to a controller on board the vessel 4, so that corrections can be made. Even so, the alignment process remains lengthy and arduous.

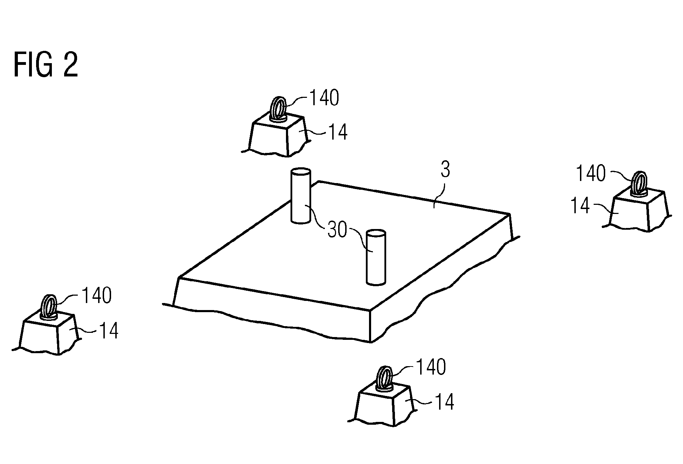

Fig. 2 shows a first stage in the method according to the invention. Here, an arrangement of anchors 14 has been deposited about a template 3 of a subsea installation. The anchors 14 may have been brought into position by an ROV or other suitable device. Each anchor 14 has a ring 140 that can be used to connect to a cable, for example by means of a hook or a carabiner or other releasable connector.

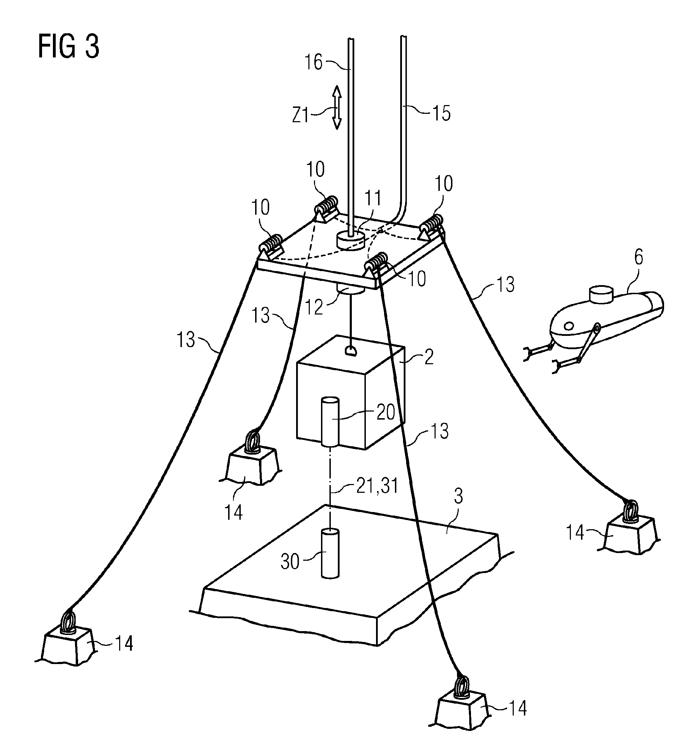

Fig. 3 shows a second stage in the method according to the invention. Here, an installation tool 1 has been lowered towards the template 3. The installation tool 1 is already connected to a module 2, which is to be installed over a guidepost 30 of the template 3. For the sake of clarity, only one guidepost is shown in this and the following diagrams, but of course the template can comprise any number of guideposts. The module 2 may be suspended from the installation tool 1 by means of a constant-pull module winch 12. The installation tool 1 is in turn suspended from a vessel such as an intervention vessel (not shown in the diagram). A lowering of the installation tool 1 in a vertical direction Z₁ can be effected by a vertical position winch 11, which is preferably a constant-pull winch 11.

In this embodiment, the installation tool 1 is rectangular in shape. A winch 10 is mounted at each corner, for correcting a horizontal position of the installation tool 1. The cable 13 of each "horizontal position" winch 10 has been connected to the anchor ring 140 of the nearest anchor 14. These horizontal position winches 10 can now be deployed to align the vertical axes 21, 31 so that the module 2 can be brought into the desired position over the guidepost 30. An ROV 6 can be used to monitor the alignment progress and to communicate this to a controller on the intervention vessel. The controller can issue commands or control signals, which can be passed to the actuators 10 via a communications line 15, which is connected to the actuators 10 in the usual manner, as indicated by the dashed lines connecting communications line 15 and the winches 10.

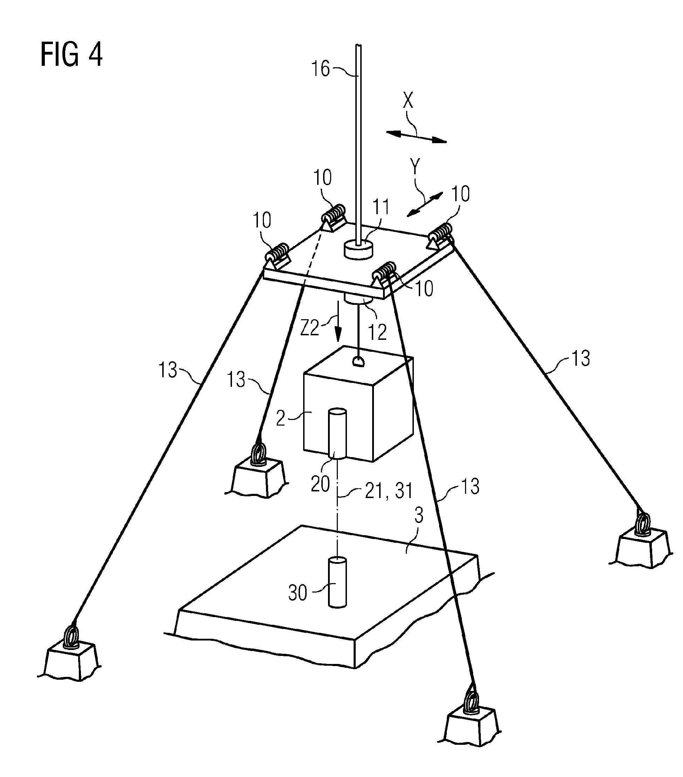

Fig. 4 shows a third stage in the method according to the invention. Here, one or more of the horizontal position winches 10 have been actuated to retract cable or play out cable as required in order to laterally adjust the position of the installation tool 1, as indicated by the arrows X, Y in the diagram (for the sake of clarity, the communications line 15 has been left out from this diagram). The vertical axes 21, 31 have been aligned, without any further position correction at the level of the vessel, to bring the very heavy module 2 into place over its guidepost 30 on the template 3. The module 2 can now be lowered into place onto the template 3. This can be effected by a module winch 12 which can play out cable to lower the module in a vertical direction Z₂ as shown in the diagram. The horizontal position winches 10 can be "locked" during this step, i.e. they neither play out nor retract any cable, so that the installation tool 1 remains essentially fixed in place relative to the template 3 as long as the module 2 is being lowered onto the guidepost 30. By locking the horizontal position winches 10 in this way, any displacement of the intervention vessel, for example owing to strong winds, will have no effect on the installation tool 1, which will remain fixed in place relative to the template 3.

The vertical position winch 11 can be actuated as necessary to compensate for any displacement of the intervention vessel. If wind conditions are still, the vertical position winch 11 may also be locked.

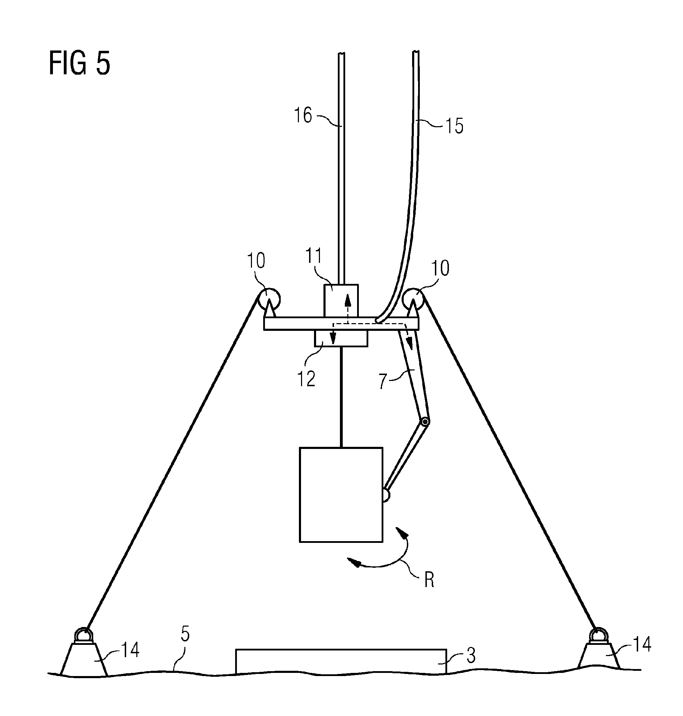

Fig. 5 shows a further embodiment of the installation tool 1. Here, the installation tool 1 comprises an auxiliary tool 17, in this case a hydraulic arm 17. This can be deployed for several purposes. Here, the hydraulic arm 17 is being used to perform a minor rotational correction R to the position of the module 2 over the template 3. Later, after placement of this and other modules, the hydraulic arm can be used to interconnect the modules to each other or to other elements of the subsea installation. For example, the hydraulic arm 17 could be used to connect a transformer of a subsea power grid to a transmission line. These procedures can all be carried out in a controlled manner since the position of the installation tool 1 can be reliably fixed using the winches 10, 11, and suitable control signals can be issued during any alignment and correction procedures to the relevant actuators 10, 11, 12, 17 via the communications line 15.

Although the present invention has been disclosed in the form of preferred embodiments and variations thereon, it will be understood that numerous additional modifications and variations could be made thereto without departing from the scope of the invention. For example, a connecting means such as a cable can be connected to the anchor and deposited on the seabed, ready for connection to an actuator of the installation tool. Also, a camera could be installed on the installation tool to monitor the progress of the alignment procedure, so that an ROV need not be used.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. An underwater module handling apparatus comprising
- an installation tool (1) realised for connection to a module (2) to be installed at the underwater location;
- a suspension means (16) for suspending the installation tool (1) from a marine vessel (4);
- connecting means (13) for connecting the installation tool (1) to a number of anchors (14) arranged at the underwater location; and
- a number of actuators (10) for actuating the connecting means (13) to effect a horizontal displacement (H) of the installation tool (1).

2. A module handling apparatus according to claim 1, comprising a number of auxiliary tools (12, 17) for manipulating the module (2).

3. A module handling apparatus according to claim 2, wherein an auxiliary tool (17) comprises a hydraulic arm (17).

4. A module handling apparatus according to claim 1 or
claim 2, wherein an auxiliary tool (12) comprises a lifting winch (12).

5. A module handling apparatus according to any of the preceding claims, wherein the actuators (10) of the connecting means (13) are synchronously controllable such that a horizontal displacement (H) of the installation tool (1) is effected by a shortening of first connecting means (13) and a lengthening of second connecting means (13).

6. A module handling apparatus according to any of the preceding claims, comprising a supply line (15) for connecting an auxiliary tool (12, 17) and/or an actuator (10, 11) to a power supply and/or to a control unit.

7. A module handling apparatus to any of the preceding claims, comprising an actuator (11) for actuating the suspension means (16) to effect a vertical displacement (V₁) of the installation tool (1).

8. A module handling apparatus according to any of the preceding claims, wherein an actuator (10, 11, 12) comprises a winch (10, 11, 12).

9. A module handling apparatus according to any of the preceding claims, wherein a winch (10, 11, 12) comprises a constant-pull winch (10, 11, 12).

10. A module handling apparatus according to any of the preceding claims, wherein the installation tool (1) is realised for connection to at least three anchors (14) arranged at the underwater location.

11. A method of handling a module (2) in an underwater location, which method comprises the steps of
- connecting a module (2) to be installed at the underwater location to an installation tool (1);
- suspending the installation tool (1) from a marine vessel (4) over the underwater location;
- connecting the installation tool (1) to a number of anchors (14) arranged the underwater location; and
- actuating the connecting means (13) to effect a horizontal displacement (H) of the installation tool (1).

12. A method according to claim 11, comprising the step of depositing at least three anchors (14) the underwater location prior to a module installation procedure.

13. A method according to claim 11 or claim 12, comprising the step of controlling a remotely operated vessel (6) to connect a connecting means (13) of the installation tool (1) to an anchor (14).

14. A method according to any of claims 11 to 13, comprising the step of locking an actuator (10, 11, 12) to fix the position of the installation tool (1) relative to the underwater location.

15. A method according to any of claims 11 to 14, comprising the step of controlling an auxiliary tool (17) to perform a manipulation process on a module (2).
